# EUROPEAN PATENT APPLICATION

(11) **EP 4 712 149 A1**
(43) Date of publication of application: **18.03.2026**
(21) Application number: 24940314.8
(22) Date of filing: 07.06.2024
(51) Int. Cl.: H01M 4/04, B05C 5/02

(54) **ELECTRODE SHEET MANUFACTURING METHOD AND COATING DEVICE**

(30) Priority: 08.05.2024 CN 202410558819
(71) Applicant: ZHEJIANG LIWINON ENERGY TECHNOLOGY CO., LTD., Jinhua, Zhejiang 321102 (CN)
(72) Inventor: ZOU, Jun, Jinhua, Zhejiang 321102 (CN); LIU, Husheng, Jinhua, Zhejiang 321102 (CN); WANG, Zhonghui, Jinhua, Zhejiang 321102 (CN); LI, Cong, Jinhua, Zhejiang 321102 (CN); JI, Rongjin, Jinhua, Zhejiang 321102 (CN); WU, Shengben, Jinhua, Zhejiang 321102 (CN); CHEN, Jie, Jinhua, Zhejiang 321102 (CN); LI, Zaibo, Jinhua, Zhejiang 321102 (CN)
(74) Representative: Primiceri, Maria Vittoria
(86) International application number: PCT/CN2024/098052
(87) International publication number: WO 2025/231959

(57) **Abstract**

A method of manufacturing an electrode sheet and a coating device. The method of manufacturing an electrode sheet includes the following steps: coating a to-be-coated surface of a current collector with a first active material to form a first wide layer; coating the to-be-coated surface with a second active material to form a narrow layer; and coating the to-be-coated surface with a third active material to form a second wide layer. The first wide layer, the narrow layer, the second wide layer, and the to-be-coated surface jointly define a tab welding groove. According to the method, the tab welding groove is processed through coating without laser cleaning, which helps to reduce manufacturing costs of an electrode sheet.

## Description

### TECHNICAL FIELD

The present disclosure relates to the field of battery manufacturing technologies, and in particular, to a method of manufacturing an electrode sheet and a coating device.

### BACKGROUND

An electrode sheet of a battery cell is usually provided with a tab welding groove, where a portion of a current collector at the tab welding groove is not covered by an active material layer. A tab is welded to the current collector exposed at the tab welding groove. To form the tab welding groove, a notch needs to be formed in the active material layer of the electrode sheet. In the prior art, the tab welding groove is generally processed as follows: First, the current collector is coated with an active material to form the active material layer, which is initially rectangular after the coating is completed. Then, the active material layer is laser-cleaned to remove a portion of the active material layer from the current collector. After the laser cleaning is completed, a notch appears in the active material layer, forming the tab welding groove on the electrode sheet. However, the laser cleaning is costly, resulting in high manufacturing costs of the electrode sheet.

### SUMMARY

The present disclosure aims to resolve at least one of the technical problems existing in the prior art. Therefore, the present disclosure provides a method of manufacturing an electrode sheet. According to the method, a tab welding groove is constructed through coating without laser cleaning, which helps to reduce manufacturing costs of an electrode sheet.

The present disclosure further provides a coating device.

The method of manufacturing an electrode sheet according to an embodiment in a first aspect of the present disclosure includes: coating a to-be-coated surface of a current collector with a first active material to form a first wide layer; coating the to-be-coated surface with a second active material to form a narrow layer; and coating the to-be-coated surface with a third active material to form a second wide layer. The first wide layer, the narrow layer, the second wide layer, and the to-be-coated surface jointly define a tab welding groove; wherein the materials of the first active material, the second active material, and the third active material are all the same; the first wide layer, the narrow layer, and the second wide layer are sequentially connected along a first direction; a length of the narrow layer in a second direction is less than a length of the first wide layer in the second direction; the length of the narrow layer in the second direction is less than a length of the second wide layer in the second direction; and any two of the first direction, the second direction, and a thickness direction of the current collector are perpendicular to each other.

The method of manufacturing an electrode sheet according to the embodiment in the first aspect of the present disclosure has at least the following advantages: After the coating of the first wide layer, the narrow layer, and the second wide layer is completed, the three jointly constitute an active material layer of an electrode sheet. The first wide layer, the narrow layer, the second wide layer, and the to-be-coated surface jointly define the tab welding groove. In this way, the tab welding groove does not need to be formed through laser cleaning. The manufacturing method helps to reduce manufacturing costs of the electrode sheet.

According to some embodiments of the present disclosure, the length of the first wide layer in the second direction is equal to the length of the second wide layer in the second direction.

According to some embodiments of the present disclosure, the first wide layer, the narrow layer, and the second wide layer are formed sequentially; the step of forming the first wide layer includes: coating the to-be-coated surface with the first active material along the first direction; the step of forming the narrow layer includes: coating the to-be-coated surface with the second active material along the first direction, where a coating start point of the narrow layer coincides with a coating end point of the first wide layer; and the step of forming the second wide layer includes: coating the to-be-coated surface with the third active material along the first direction, where a coating start point of the second wide layer coincides with a coating end point of the narrow layer.

According to some embodiments of the present disclosure, the method of manufacturing an electrode sheet includes: coating a to-be-coated surface of a current collector jumbo roll with a first active material to form a first continuous layer; coating the to-be-coated surface with a second active material to form a discontinuous layer, where the discontinuous layer includes a plurality of narrow layers; coating the to-be-coated surface with a third active material to form a second continuous layer, where the first continuous layer, the discontinuous layer, and the second continuous layer are sequentially connected along a first direction; the plurality of narrow layers are distributed at intervals along a second direction; any two of the first direction, the second direction, and a thickness direction of the current collector are perpendicular to each other; and the materials of the first active material, the second active material, and the third active material are all the same; and splitting an intermediate product to form a plurality of electrode sheets, where the intermediate product is a current collector provided with the first continuous layer, the discontinuous layer, and the second continuous layer. The current collector jumbo roll is split into a plurality of current collectors; the first continuous layer is split into a plurality of first wide layers distributed along the second direction; and the second continuous layer is split into a plurality of second wide layers distributed along the second direction. The electrode sheet obtained through splitting includes a current collector, a first wide layer, the narrow layer, and a second wide layer; the first wide layer, the narrow layer, and the second wide layer are sequentially connected along the first direction; a length of the narrow layer in the second direction is less than a length of the first wide layer in the second direction; the length of the narrow layer in the second direction is less than a length of the second wide layer in the second direction; and the first wide layer, the narrow layer, the second wide layer, and the to-be-coated surface jointly define a tab welding groove.

According to some embodiments of the present disclosure, the first continuous layer, the discontinuous layer, and the second continuous layer are formed sequentially; the step of forming the first continuous layer includes: coating the to-be-coated surface with the first active material along the first direction; the step of forming the discontinuous layer includes: coating the to-be-coated surface with the second active material along the first direction, where a coating start point of the discontinuous layer coincides with a coating end point of the first continuous layer; and the step of forming the second continuous layer includes: coating the to-be-coated surface with the third active material along the first direction, where a coating start point of the second continuous layer coincides with a coating end point of the discontinuous layer.

The coating device according to an embodiment in a second aspect of the present disclosure includes a discharge mechanism and a feeding mechanism connected to each other; the discharge mechanism has a first discharge port and a second discharge port; and the feeding mechanism and the discharge mechanism are configured as follows: during a first time period, the feeding mechanism causes the first active material to flow out of the first discharge port; during a second time period, the feeding mechanism causes the second active material to flow out of the second discharge port; and during a third time period, the feeding mechanism causes the third active material to flow out of the first discharge port. The first time period, the second time period, and the third time period are sequentially set chronologically; the current collector continuously passes through the first discharge port and the second discharge port during the first time period to the third time period; the first discharge port and the second discharge port are distributed at intervals along the thickness direction of the current collector; and a length of the second discharge port in the second direction is less than a length of the first discharge port in the second direction.

The coating device of this embodiment has at least the following beneficial effects: In this embodiment, the first wide layer, the narrow layer, and the second wide layer are sequentially formed efficiently on the current collector through alternate discharging from two discharge ports (the first discharge port and the second discharge port) of different widths during different time periods.

According to some embodiments of the present disclosure, an angle between an orientation of the first discharge port and an orientation of the second discharge port is an acute angle; and when the coating device coats the to-be-coated surface, an intersection point between the orientation of the first discharge port and the orientation of the second discharge port is located on the to-be-coated surface, or the intersection point is located between the to-be-coated surface and the first discharge port.

According to some embodiments of the present disclosure, the discharge mechanism includes two coating heads, one of the coating heads is provided with the first discharge port, and the other coating head is provided with the second discharge port; or the discharge mechanism includes one coating head, and the first discharge port and the second discharge port are arranged on the same coating head.

According to some embodiments of the present disclosure, the coating device includes a discharge mechanism, a feeding mechanism, and an adjustment mechanism; the discharge mechanism has a discharge port;; the adjustment mechanism is configured to adjust a length of the discharge port in the second direction; the feeding mechanism is connected to the discharge mechanism; and the feeding mechanism and the adjustment mechanism are configured as follows: during a first time period, the feeding mechanism causes the first active material to flow out of the discharge port, where the length of the discharge port in the second direction is a first length; during a second time period, the feeding mechanism causes the second active material to flow out of the discharge port, where the length of the discharge port in the second direction is a second length, and the second length is less than the first length; and during a third time period; the feeding mechanism causes the third active material to flow out of the discharge port, where the length of the discharge port in the second direction is the first length. The first time period, the second time period, and the third time period are sequentially set chronologically; the current collector continuously passes through the discharge port during the first time period, the second time period, and the third time period; and a movement direction of the discharge port relative to the current collector is the first direction.

The coating device of this embodiment has at least the following beneficial effects: In this embodiment, the first wide layer, the narrow layer, and the second wide layer are sequentially formed efficiently on the current collector by changing a width of the same discharge port during different time periods.

According to some embodiments of the present disclosure, the coating device includes a discharge mechanism and a feeding mechanism connected to each other; the discharge mechanism has a first discharge port and a plurality of second discharge ports; and the feeding mechanism and the discharge mechanism are configured as follows: during a first time period, the feeding mechanism causes the first active material to flow out of the first discharge port; during a second time period, the feeding mechanism causes the second active material to flow out of the plurality of second discharge ports; and during a third time period, the feeding mechanism causes the third active material to flow out of the first discharge port. The first time period, the second time period, and the third time period are sequentially set chronologically; the current collector continuously passes through the first discharge port and the second discharge ports during the first time period to the third time period; the first discharge port and the second discharge port are distributed at intervals along the thickness direction of the current collector; the plurality of second discharge ports are distributed at intervals along the second direction; and a sum of lengths of the plurality of second discharge ports in the second direction is less than a length of the first discharge port in the second direction.

The coating device of this embodiment has at least the following beneficial effects. In this embodiment, the first continuous layer, the discontinuous layer, and the second continuous layer are sequentially formed efficiently on the current collector through alternate discharging from two discharge ports (the first discharge port and the second discharge port) of different widths during different time periods.

According to some embodiments of the present disclosure, the discharge mechanism includes one coating head; the first discharge port and the second discharge ports are located on the coating head; and the coating head includes: an upper die; a middle die, where the upper die and the middle die are stacked on each other and define a first flow channel for the first active material and the third active material to flow; and the first flow channel includes the first discharge port; a lower die, where the lower die and the middle die are stacked on each other and define a second flow channel for the second active material to flow; the second flow channel includes an exit slit; the upper die and the lower die are located on different sides of the middle die; and the first flow channel and the second flow channel are separated from each other; and a lower shim, where the lower shim includes a plurality of separators distributed at intervals along the second direction; the lower shim is detachably sandwiched between the lower die and the middle die; and a portion of the exit slit is blocked by the separators, such that portions of the exit slit exposed outside the separators form the plurality of second discharge ports.

According to some embodiments of the present disclosure, the discharge mechanism includes one coating head; the first discharge port and the second discharge ports are located on the coating head; and the coating head includes: an upper die; a middle die, where the upper die and the middle die are stacked on each other and define a second flow channel for the second active material to flow; and the second flow channel includes an exit slit; a lower die, where the lower die and the middle die are stacked on each other and define a first flow channel for the first active material and the third active material to flow; and the first flow channel includes the first discharge port; and an upper shim, where the upper shim includes a plurality of separators distributed at intervals along the second direction; the upper shim is detachably sandwiched between the upper die and the middle die; and a portion of the exit slit is blocked by the separators, such that portions of the exit slit exposed outside the separators form the second discharge ports.

Additional aspects and advantages of the present disclosure are set forth in the following descriptions, some of which will become apparent in the following descriptions, or be known by practice of the present disclosure.

### BRIEF DESCRIPTION OF THE DRAWINGS

The following further describes the present disclosure with reference to accompanying drawings and embodiments.
FIG. 1 is a top view of an electrode sheet to be manufactured according to the present disclosure;
FIG. 2 is a schematic diagram of a method of manufacturing an electrode sheet according to an embodiment of the present disclosure;
FIG. 3 is a schematic diagram of a coating process of a first wide layer, a narrow layer, and a second wide layer according to an embodiment of the present disclosure;
FIG. 4 is a schematic diagram of a method of manufacturing an electrode sheet according to another embodiment of the present disclosure;
FIG. 5 is a schematic diagram of a coating process of a first continuous layer, a discontinuous layer, and a second continuous layer;
FIG. 6 is a schematic diagram of a splitting process of an intermediate product;
FIG. 7 is a schematic diagram of coating by a coating head according to some embodiments of the present disclosure;
FIG. 8 is a schematic diagram of orientations of a first discharge port and a second discharge port according to some embodiments;
FIG. 9 is a schematic diagram of shapes of the first discharge port and the second discharge port; and
FIG. 10 is a schematic diagram of a first shim and a second shim according to some embodiments of the present disclosure.

Reference numerals:
101: electrode sheet, 102: current collector, 103: to-be-coated surface, 104: active material layer, 105: tab welding groove, 106: first wide layer, 107: narrow layer, 108: second wide layer, 109: first continuous layer, 110: discontinuous layer, 111: second continuous layer, 112: current collector jumbo roll, and 113: intermediate product;
201: coating head, 202: first discharge port, 203: second discharge port, 204: upper die, 205: middle die, 206: lower die, 207: upper shim, 208: lower shim, 209: separator, 210: exit slit, 211: back roller.

### DETAILED DESCRIPTION

Embodiments of the present disclosure will be described in detail hereinafter in conjunction with accompanying drawings in which the same or like reference numerals refer to the same or like elements or elements having the same or like functions throughout. The embodiments described below by reference to the accompanying drawings are illustrative and are intended for illustrating only and are not to be construed as limiting the present disclosure.

In the description of the present disclosure, it should be understood that for the description of orientations, the orientation or positional relationships indicated by the terms such as "upper," "lower," "front," "rear," "left," "right," and the like are based on orientation or positional relationships shown in the accompanying drawings, and are used only for ease and brevity of illustration and description, rather than indicating or implying that the mentioned apparatus or element must have a particular orientation or must be constructed and operated in a particular orientation. Therefore, such terms should not be construed as limiting the present disclosure.

In the description of the present disclosure, the term "at least one" means one or more, the term "plurality of" (or multiple) means at least two, the term such as "greater than," "less than," "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first," "second," and the like are merely used for distinguishing technical features, and are not intended to indicate or imply relative importance, or implicitly point out the number of the indicated technical features, or implicitly point out the precedence order of the indicated technical features.

In the description of the present disclosure, unless otherwise explicitly defined, the terms such as "configure," "install/mount" and "connect" should be understood in a broad sense, and those having ordinary skills in the art can reasonably determine the specific meanings of the above terms in the present disclosure based on the specific contents of the technical scheme.

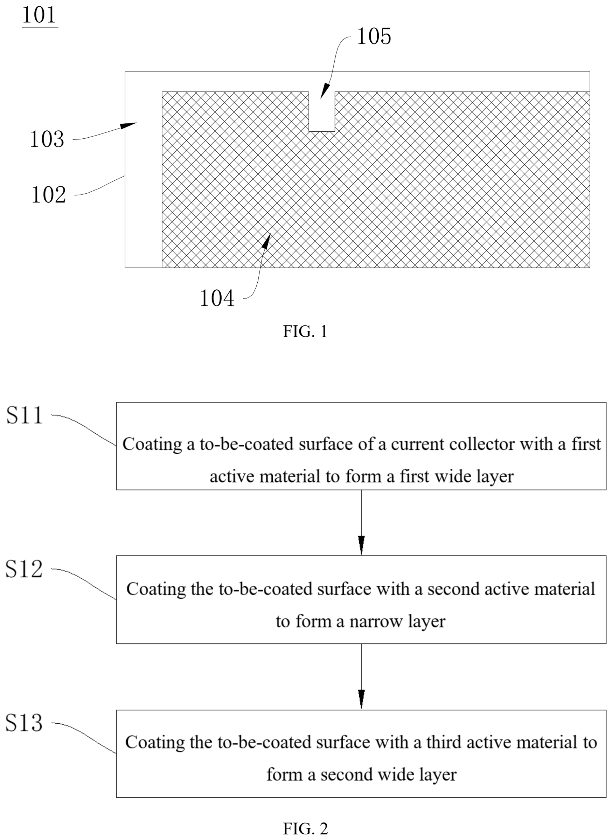

FIG. 1 shows an electrode sheet 101. The electrode sheet 101 can be used in wound battery cells, and FIG. 1 shows the electrode sheet 101 in a flattened state. Both the prior art and technical solutions of the present disclosure can be used to manufacture the electrode sheet 101 shown in FIG. 1. Furthermore, the method of manufacturing an electrode sheet of the present disclosure can also be used to manufacture an electrode sheet 101 suitable for a laminated battery cell. The electrode sheet 101 of the laminated battery cell also needs to be provided with a tab welding groove 105.

FIG. 1 shows the electrode sheet 101 from a top view rather than a cross-sectional view. In FIG. 1, a portion, namely, an active material layer 104, is filled with grid lines to distinguish the active material layer 104 from a current collector 102. In the prior art, a process of manufacturing the electrode sheet shown in FIG. 1 is generally as follows: First, the active material layer 104 is arranged on a surface of the current collector 102 through a coating process. The formed active material layer 104 is rectangular. The active material layer 104 being rectangular is determined by an existing coating device or process. A coating head of the coating device has a slit that allows slurry of an active material to flow out. During coating, the current collector 102 is conveyed and passes through the slit of the coating head. In this way, the active material layer 104 obtained after coating is rectangular (which is rectangular before laser cleaning). After the coating is completed, the rectangular active material layer 104 is cleaned through a laser cleaning process, to remove a portion of the active material layer 104 and form the tab welding groove 105 shown in FIG. 1. The laser cleaning is costly, resulting in high manufacturing costs of the electrode sheet 101.

To resolve the problem of high costs of the electrode sheet 101, according to the method of manufacturing an electrode sheet of the present disclosure, the tab welding groove 105 does not need to be formed through laser cleaning.

As shown in FIG. 2, in an embodiment, the method of manufacturing an electrode sheet of the present disclosure includes the following steps:
S11: coating a to-be-coated surface 103 of a current collector 102 with a first active material to form a first wide layer 106;
S12: coating the to-be-coated surface 103 with a second active material to form a narrow layer 107; and
S13: coating the to-be-coated surface 103 with a third active material to form a second wide layer 108.

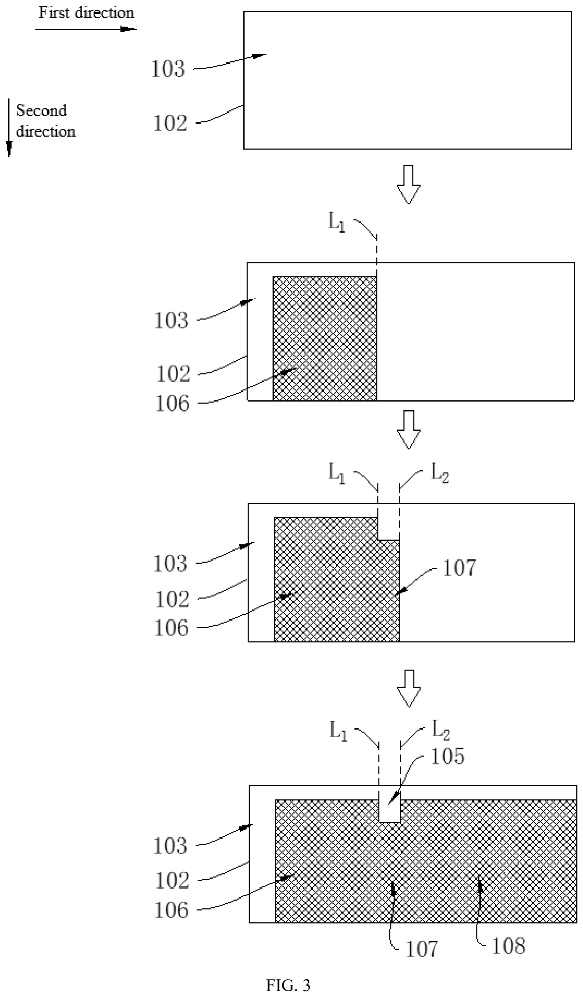

FIG. 3 shows a process of forming the first wide layer 106, the narrow layer 107, and the second wide layer 108. After the coating of the first wide layer 106, the narrow layer 107, and the second wide layer 108 is completed, the three jointly constitute an active material layer 104 of an electrode sheet 101. The first wide layer 106, the narrow layer 107, the second wide layer 108, and the to-be-coated surface 103 jointly define a tab welding groove 105. In this way, the tab welding groove 105 does not need to be formed through laser cleaning. The manufacturing method helps to reduce manufacturing costs of the electrode sheet 101.

Any two of the first active material, the second active material, and the third active material are made of the same material. The three names are mainly used to distinguish between active materials applied in different steps. For lithium-ion battery cells, materials of the current collector 102 and the active materials are well-known in the art, which are not described in detail here. As shown in FIG. 3, the first wide layer 106, the narrow layer 107, and the second wide layer 108 are sequentially connected along a first direction. A length of the narrow layer 107 in the second direction is less than a length of the first wide layer 106 in the second direction; and the length of the narrow layer 107 in the second direction is less than a length of the second wide layer 108 in the second direction. Any two of the first direction, the second direction, and a thickness direction of the current collector 102 are perpendicular to each other. Specifically, the first direction can be a left-to-right direction; the second direction can be a back-to-front direction; and the thickness direction of the current collector 102 can be an up-down direction (a direction perpendicular to a plane of paper of FIG. 3). The to-be-coated surface 103 of the current collector 102 can be an end surface of the current collector 102 in the thickness direction of the current collector 102. For example, the to-be-coated surface 103 of the current collector 102 is an upper surface of the current collector 102. FIG. 3 merely shows a process of coating the upper surface of the current collector 102. If a lower surface of the current collector 102 also needs to be provided with an active material layer, a manner of coating the lower surface of the current collector 102 can be the same as the manner of coating the upper surface.

It should be noted that in the present disclosure, some steps in the method are marked with symbols such as "S11" and "S12", but the marking with these symbols is performed only for convenient reference to the steps, and numerical values in these symbols do not directly represent an order of the steps. For example, in some embodiments, the first wide layer 106, the narrow layer 107, and the second wide layer 108 are sequentially formed chronologically (as shown in FIG. 3), that is, S11, S12, and S13 are performed chronologically (as shown in FIG. 2). For another example, in some other embodiments, the first wide layer 106, the narrow layer 107, and the second wide layer 108 can be formed synchronously, that is, S11, S12, and S13 are performed synchronously. For another example, in some other embodiments, the narrow layer 107 can be formed between the two other wide layers. Temporal relationships between the three steps are not listed here one by one. A coating direction of the narrow layer 107, the first wide layer 106, and the second wide layer 108 is not specifically limited, provided that the three layers are finally formed through coating.

The length of the narrow layer 107 in the second direction is a width of the narrow layer 107; the length of the first wide layer 106 in the second direction is a width of the first wide layer 106; and the length of the second wide layer 108 in the second direction is a width of the second wide layer 108. In some embodiments, the width of the first wide layer 106 is equal to the width of the second wide layer 108. Such arrangement helps to improve uniformity of active material quantities in different regions of the electrode sheet 101, thereby helping to improve quality of the electrode sheet 101 or a battery cell.

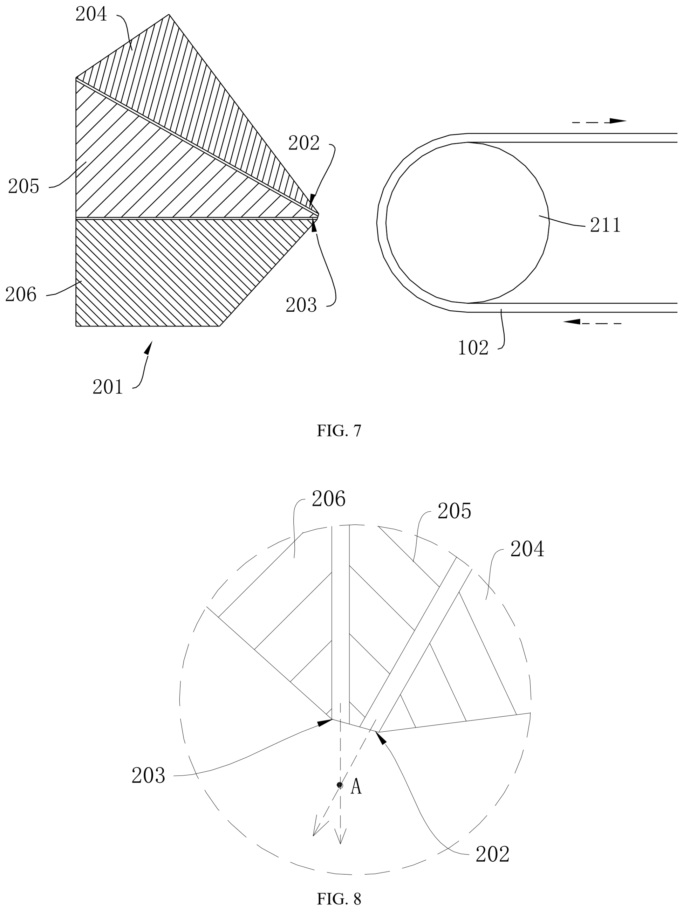

In some embodiments, the first direction can be opposite to a conveyor belt direction of the current collector 102; and the first wide layer 106, the narrow layer 107, and the second wide layer 108 are formed sequentially. During coating, a movement direction of the current collector 102 relative to a coating head 201 is the conveyor belt direction of the current collector 102 (as shown in FIG. 7). The foregoing arrangement has the following advantages: the first wide layer 106, the narrow layer 107, and the second wide layer 108 are formed through coating along the same direction. Therefore, a movement direction of the current collector 102 or the coating head 201 does not need to be changed when different active material layers 104 are processed, resulting in high coating efficiency and manufacturing efficiency of electrode sheet 101. Correspondingly, with reference to FIG. 3, in the foregoing arrangement manner, the step of forming the first wide layer 106 includes: coating the to-be-coated surface 103 with the first active material along the first direction. The step of forming the narrow layer 107 includes: coating the to-be-coated surface 103 with the second active material along the first direction, where a coating start point of the narrow layer 107 coincides with a coating end point of the first wide layer 106. The step of forming the second wide layer 108 includes: coating the to-be-coated surface 103 with the third active material along the first direction, where a coating start point of the second wide layer 108 coincides with a coating end point of the narrow layer 107. Specifically, as shown in FIG. 3, a straight line L₁ represents the coating end point of the first wide layer 106 and the coating start point of the narrow layer 107; and a straight line L₂ represents the coating end point of the narrow layer 107 and the coating start point of the second wide layer 108.

A coating device capable of coating along the first direction to sequentially form the first wide layer 106, the narrow layer 107, and the second wide layer 108 is described below.

In some embodiments, the coating device includes a discharge mechanism and a feeding mechanism connected to each other, and the discharge mechanism has a first discharge port 202 and a second discharge port 203 (as shown in FIG. 8). The feeding mechanism and the discharge mechanism are configured as follows: during a first time period (denoted as t₁), the feeding mechanism causes the first active material to flow out of the first discharge port 202, and no active material flows out of the second discharge port 203; during a second time period (denoted as t₂), the feeding mechanism causes the second active material to flow out of the second discharge port 203, and no active material flows out of the first discharge port 202; and during a third time period (denoted as t₃), the feeding mechanism causes the third active material to flow out of the first discharge port 202, and no active material flows out of the second discharge port 203.

The three time periods t₁, t₂, and t₃ are sequentially set chronologically. The current collector 102 continuously passes through the first discharge port 202 and the second discharge port 203 during t₁, t₂, and t₃. Duration of any one of the three time periods t₁, t₂, and t₃ is not zero, and an end point of t₁ can be a start point of t₂, and an end point of t₂ can be a start point of t₃. In some embodiments, the first discharge port 202 and the second discharge port 203 are distributed at intervals along the thickness direction of the current collector 102. A normal direction of a plane formed by the first direction and the second direction is the thickness direction of the current collector 102. A length of the second discharge port 203 in the second direction is a width of the second discharge port 203; and a length of the first discharge port 202 in the second direction is a width of the first discharge port 202. The width of the second discharge port 203 is less than the width of the first discharge port 202. The second direction is not shown in FIG. 8, and the second direction can be a direction perpendicular to a plane of paper of FIG. 7.

The first active material applied during t₁ finally forms the first wide layer 106; the second active material applied during t₂ finally forms the narrow layer 107; and the third active material applied during t₃ finally forms the second wide layer 108. In this embodiment, the first wide layer 106, the narrow layer 107, and the second wide layer 108 are sequentially formed on the current collector 102 through alternate discharging from two discharge ports (the first discharge port 202 and the second discharge port 203) of different widths during different time periods.

Although there is a spacing between the first discharge port 202 and the second discharge port 203, a risk of seams between the narrow layer 107 and the wide layers can be reduced by setting orientation of the first discharge port 202 and the second discharge port 203. For example, as shown in FIG. 8, in some embodiments, an angle between the orientation of the first discharge port 202 and the orientation of the second discharge port 203 is an acute angle; and when the coating device coats the to-be-coated surface 103, an intersection point (a point A) between the two is located on the to-be-coated surface 103, or the intersection point is located between the to-be-coated surface 103 and the first discharge port 202. The orientation of the discharge port can be approximated as a flow direction of active material flowing out of the discharge port. Therefore, the intersection point satisfying the foregoing conditions helps to achieve "the coating start point of the narrow layer 107 coincides with the coating end point of the first wide layer 106" and "the coating start point of the second wide layer 108 coincides with the coating end point of the narrow layer 107", thereby reducing the risk of seams between the narrow layer 107 and the wide layers, and improving quality of the electrode sheet 101.

In some embodiments, the feeding mechanism can include a tank, a conveying pipe, a conveying pump, and a valve. The discharge mechanism can include one coating head 201 (as shown in FIG. 7); and the first discharge port 202 and the second discharge port 203 are located on the same coating head 201 (as shown in FIG. 8). The coating head 201 can be arranged opposite to a back roller 211. The back roller 211 is configured to support the current collector 102. The coating device can further include a winding and unwinding mechanism. The winding and unwinding mechanism is configured to drive the current collector 102 to move, such that the current collector 102 passes through the coating head 201. The tank is configured to store slurry containing the active material. The tank and the coating head 201 are connected by several conveying pipes. The conveying pump is configured to drive the active material to flow along the conveying pipes. One of the conveying pipes conveys the active material to the first discharge port 202, and another conveying pipe conveys the active material to the second discharge port 203. Each conveying pipe has a valve mounted. When the conveying pump is operating, the active material can be controlled to flow out of a discharge port by controlling states of the valves. For example, during t₁ and t₃, the valve on the conveying pipe connected to the first discharge port 202 is in an open state; and the valve on the conveying pipe connected to the second discharge port 203 is in a closed state; and during t₂, the valve on the conveying pipe connected to the first discharge port 202 is in the closed state; and the valve on the conveying pipe connected to the second discharge port 203 is in the open state.

In some other embodiments, the discharge mechanism can alternatively include two coating heads 201, the first discharge port 202 is located on one of the coating heads 201; and the second discharge port 203 is located on the other coating head 201. In the embodiments shown in FIG. 7 and FIG. 8, the first discharge port 202 and the second discharge port 203 are located on the same coating head 201. This helps to reduce the number of coating heads 201, thereby reducing a size of the discharge mechanism.

In addition, for coating along the first direction to sequentially form the first wide layer 106, the narrow layer 107, and the second wide layer 108, the coating device does not necessarily need to have two discharge ports simultaneously. The coating device can alternatively have only one discharge port, provided that a width (a length in the second direction) of the discharge port is adjustable.

For example, the coating device includes a discharge mechanism, a feeding mechanism, and an adjustment mechanism. The discharge mechanism has one discharge port; and the adjustment mechanism is configured to adjust the length of the discharge port in the second direction. The specific design of the feeding mechanism and the discharge mechanism can refer to the foregoing description. The feeding mechanism and the adjustment mechanism are configured as follows: during a first time period (t₁), the feeding mechanism causes the first active material to flow out of the discharge port, where the length of the discharge port in the second direction is a first length; during a second time period (t₂), the feeding mechanism causes the second active material to flow out of the discharge port, where the length of the discharge port in the second direction is a second length, and the second length is less than the first length; and during a third time period (t₃), the feeding mechanism causes the third active material to flow out of the discharge port, where the length of the discharge port in the second direction is the first length. The three time periods t₁, t₂, and t₃ are sequentially set chronologically. The current collector 102 continuously passes through the discharge port during t₁ to t₃. Duration of any one of the three time periods (t₁, t₂, and t₃) is not zero, and an end point of t₁ can be a start point of t₂, and an end point of t₂ can be a start point of t₃. A movement direction of the discharge port relative to the current collector 102 is the first direction. The first active material flowing out of the discharge port during t₁ finally forms the first wide layer 106; the second active material flowing out of the discharge port during t₂ finally forms the narrow layer 107; and the third active material flowing out of the discharge port during t₃ finally forms the second wide layer 108. In this embodiment, the first wide layer 106, the narrow layer 107, and the second wide layer 108 are sequentially formed on the current collector 102 by changing a width of the same discharge port during different time periods.

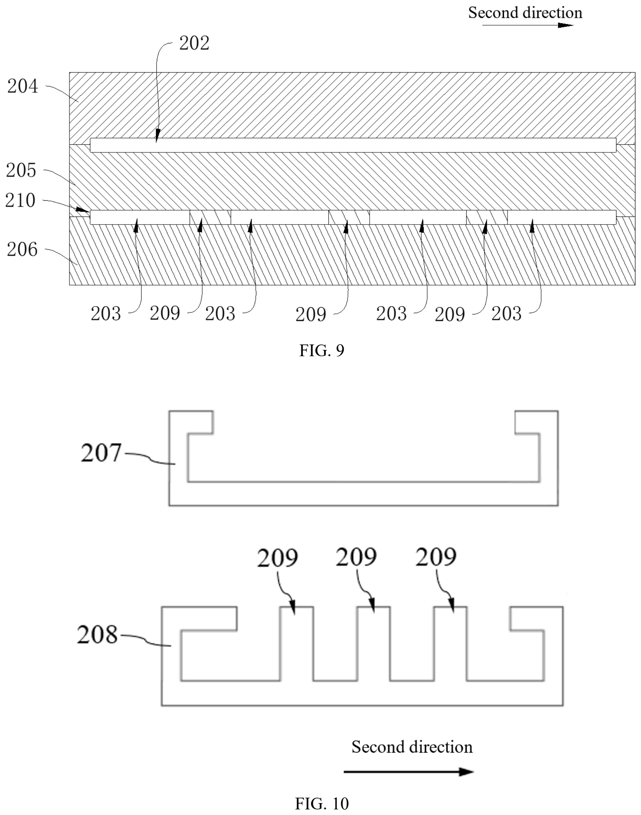

The discharge mechanism can include a coating head 201, and the coating head 201 has a straight discharge slit extending along the second direction (the discharge slit is similar to an exit slit 210 or a first discharge port 202 in an embodiment shown in FIG. 9). The adjustment mechanism can include a drive source and a baffle, and is mounted on the coating head 201. The drive source can drive the baffle to move (for example, reciprocate along a length direction of the discharge slit), to change an area of a portion of the discharge slit blocked by the baffle. The drive source can be a cylinder, a linear motor, or other components. A portion of the discharge slit that is not blocked by the baffle at a moment is a discharge port at the moment. Therefore, the adjustment mechanism can adjust a size of the discharge port. The design of the feeding mechanism can refer to the foregoing description. Details are not repeated here.

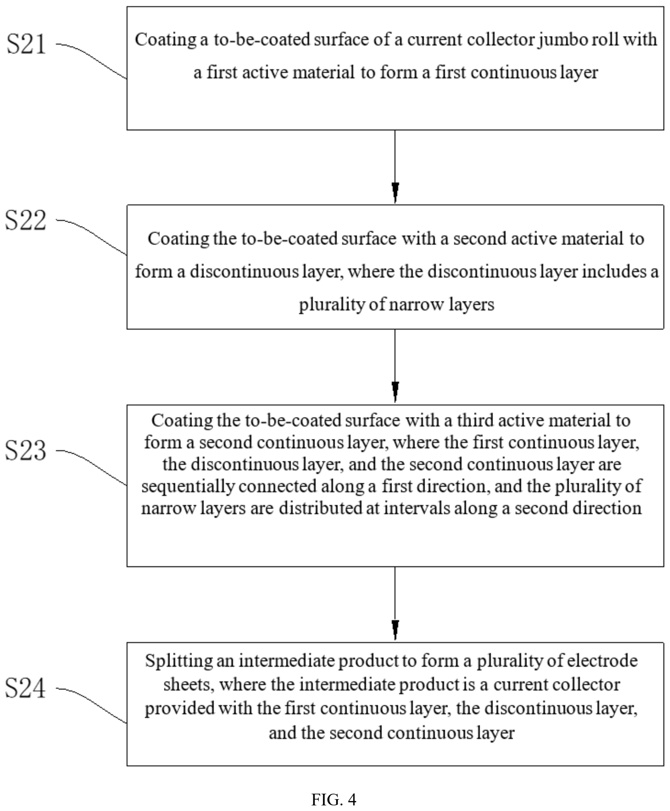

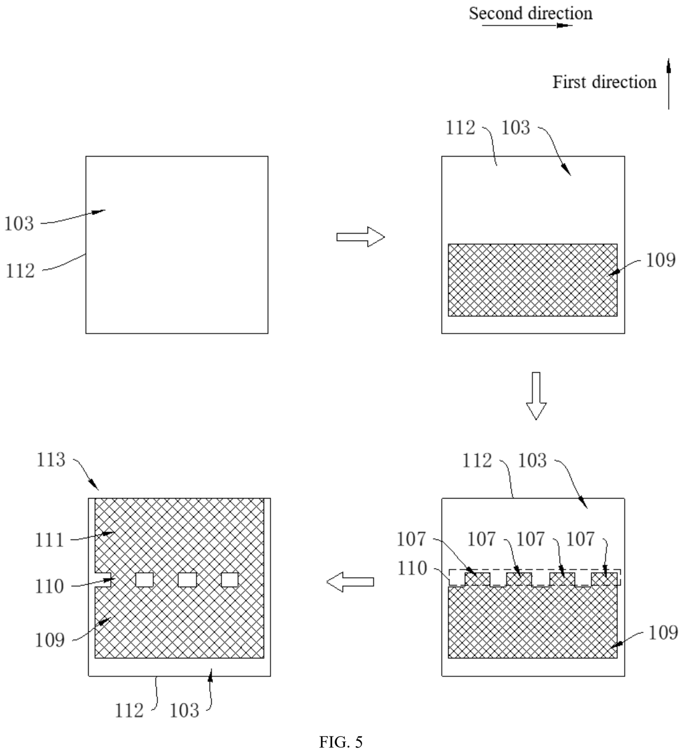

To improve productivity of electrode sheet 101, a current collector jumbo roll 112 can be first coated with an active material, and then the current collector 102 and the active material layer 104 can be split to form a plurality of electrode sheets 101. Based on this idea, as shown in FIG. 4, in some embodiments, the method of manufacturing an electrode sheet includes the following steps:
S21: coating a to-be-coated surface 103 of a current collector jumbo roll 112 with a first active material to form a first continuous layer 109;
S22: coating the to-be-coated surface 103 with a second active material to form a discontinuous layer 110, where the discontinuous layer 110 includes a plurality of narrow layers 107;
S23: coating the to-be-coated surface 103 with a third active material to form a second continuous layer 111, where the first continuous layer 109, the discontinuous layer 110; and the second continuous layer 111 are sequentially connected along a first direction; and the plurality of narrow layers 107 are distributed at intervals along a second direction (as shown in FIG. 5); and
S24: splitting an intermediate product 113 to form a plurality of electrode sheets 101, where the intermediate product 113 is a current collector 102 provided with the first continuous layer 109, the discontinuous layer 110, and the second continuous layer 111.

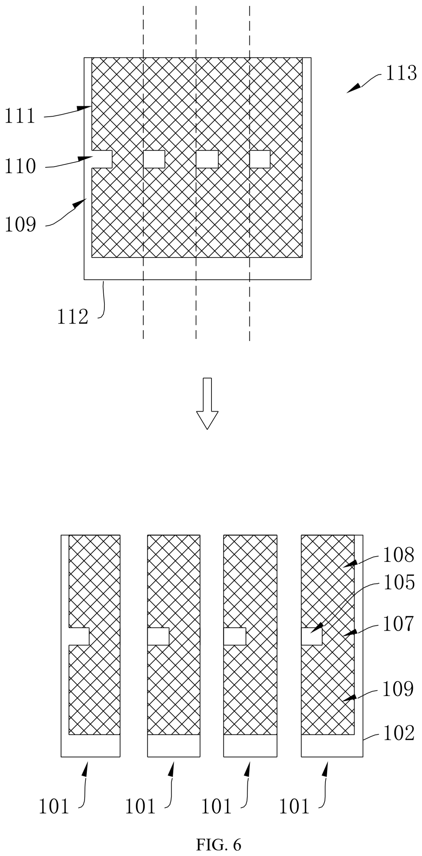

The process of forming the first continuous layer 109, the discontinuous layer 110, and the second continuous layer 111 can refer to FIG. 5. For step S24, please refer to FIG. 6. Dashed lines in FIG. 6 represent splitting lines. A cutter moves along the splitting lines to split the intermediate product 113. As shown in FIG. 6, after the splitting is completed, the current collector jumbo roll 112 is split into a plurality of current collectors 102; the first continuous layer 109 is split into a plurality of first wide layers 106 distributed along the second direction; and the second continuous layer 111 is split into a plurality of second wide layers 108 distributed along the second direction. The electrode sheet 101 obtained through splitting includes a current collector 102, a first wide layer 106, a narrow layer 107, and a second wide layer 108. The first wide layer 106, narrow layer 107, and second wide layer 108 are sequentially connected along the first direction. A length of the narrow layer 107 in the second direction is less than a length of the first wide layer 106 in the second direction; and the length of the narrow layer 107 in the second direction is less than a length of the second wide layer 108 in the second direction. The first wide layer 106, the narrow layer 107, the second wide layer 108, and the to-be-coated surface 103 jointly define a tab welding groove 105.

In this embodiment, the coating with the first active material to form the first continuous layer 109 is equivalent to simultaneously forming the plurality of first wide layers 106; and the coating with the second active material to form the second continuous layer 111 is equivalent to simultaneously forming the plurality of second wide layers 108. Therefore, the present disclosure helps to improve productivity of electrode sheet 101.

Similar to steps S11 to S13, an order of steps S21 to S23 is not strictly limited, but step S24 needs be performed after steps S21 to S23 are completed. In addition, a coating direction of the first continuous layer 109, the discontinuous layer 110, and the second continuous layer 111 is not strictly limited, provided that the three layers are finally formed through coating. Furthermore, a preferred order and coating direction are described below.

In some embodiments, the first direction is the same as a conveyor belt direction of the current collector 102; and the first continuous layer 109, the discontinuous layer 110, and the second continuous layer 111 are formed sequentially. Such arrangement has the following advantages: The first continuous layer 109, the discontinuous layer 110, and the second continuous layer 111 are formed through coating along the same direction. Therefore, a movement direction of the current collector 102 or a coating head 201 does not need to be changed when different active material layers 104 are processed, resulting in high coating efficiency and manufacturing efficiency of electrode sheet 101. Correspondingly, as shown in FIG. 5, the step of forming the first continuous layer 109 includes: coating the to-be-coated surface 103 with the first active material along the first direction. The step of forming the discontinuous layer 110 includes: coating the to-be-coated surface 103 with the second active material along the first direction, where a coating start point of the discontinuous layer 110 coincides with a coating end point of the first continuous layer 109. The step of forming the second continuous layer 111 includes: coating the to-be-coated surface 103 with the third active material along the first direction, where a coating start point of the second continuous layer 111 coincides with a coating end point of the discontinuous layer 110.

A coating device capable of coating along the first direction to sequentially form the first continuous layer 109, the discontinuous layer 110, and the second continuous layer 111 is described below.

In some embodiments, the coating device includes a discharge mechanism and a feeding mechanism connected to each other. The discharge mechanism has a first discharge port 202 and a plurality of second discharge ports 203. The feeding mechanism and the discharge mechanism are configured as follows: during a first time period (t₁), the feeding mechanism causes the first active material to flow out of the first discharge port 202, and no active material flows out of the second discharge ports 203; during a second time period (t₂), the feeding mechanism causes the second active material to flow out of the plurality of second discharge ports 203, and no active material flows out of the first discharge port 202; and during a third time period (t₃), the feeding mechanism causes the third active material to flow out of the first discharge port 202, and no active material flows out of the second discharge ports 203.

The definitions of t₁, t₂, and t₃, as well as how to control the active material to flow out of a discharge port can refer to the foregoing description. Details are not repeated here. The current collector 102 continuously passes through the first discharge port 202 and the second discharge ports 203 during t₁ to t₃. The first discharge port 202 and the second discharge ports 203 are distributed at intervals along a thickness direction of the current collector 102; and the plurality of second discharge ports 203 are distributed at intervals along the second direction. A sum of lengths of the plurality of second discharge ports 203 in the second direction is less than a length of the first discharge port 202 in the second direction. The length in the second direction is a width. If a width of the first discharge port 202 is W₁, a width of a single second discharge port 203 is W₂, and the number of second discharge ports 203 is N, then N*W₂<W₁. The first active material applied during t₁ finally forms the first continuous layer 109; the second active material applied during t₃ finally forms the second continuous layer 111; and the third active material applied during t₂ finally forms the discontinuous layer 110. It should be noted that in this embodiment, during t₂, the active material flowing out of one second discharge port 203 finally forms one narrow layer 107.

In some embodiments, as shown in FIG. 7, the discharge mechanism includes one coating head 201; and the first discharge port 202 and the second discharge ports 203 are located on the coating head 201. The coating head 201 includes an upper die 204, a middle die 205, and a lower die 206 stacked on each other; and the upper die 204 and the lower die 206 are respectively located on different sides of the middle die 205. The upper die 204 and the middle die 205 are stacked on each other and define a first flow channel for the first active material and the third active material to flow; and the first flow channel includes the first discharge port 202. The lower die 206 and the middle die 205 are stacked on each other and define a second flow channel for the second active material to flow. The first flow channel and the second flow channel are separated from each other; and the second flow channel includes an exit slit 210. The coating head 201 further includes a lower shim 208. The lower shim 208 includes a plurality of separators 209 distributed at intervals along the second direction (as shown in FIG. 10). As shown in FIG. 9, the lower shim 208 is sandwiched between the lower die 206 and the middle die 205. A portion of the exit slit 210 is blocked by the separators 209, such that portions of the exit slit 210 exposed outside the separators 209 (that is, portions not blocked by the separators 209) form the plurality of second discharge ports 203. One second discharge port 203 is formed between two adjacent separators 209.

Common commercially-available coating head 201 uses one slit as a discharge port, while the foregoing coating head 201 has the slit divided into the plurality of second discharge ports 203 by using the lower shim 208. In this way, a user can obtain the coating head 201 with the plurality of second discharge ports 203 by easily modifying a common commercially-available coating head 201 (adding the lower shim 208), which helps to reduce costs of the coating device. In some embodiments, the coating head 201 can further include an upper shim 207 (as shown in FIG. 10). The upper shim 207 is sandwiched between the upper die 204 and the middle die 205, but the upper shim 207 does not have a separator 209. The upper shim 207 can not block the first discharge port 202; and the upper shim 207 can be set to different thicknesses to adjust a width formed between the upper die 204 and the middle die 205, thereby adjusting a flow rate of the active material at the first discharge port 202.

It should be noted that in some other embodiments, positions of the two shims are interchangeable, that is, positions of the first discharge port 202 and the second discharge port 203 can be interchanged; and a coating effect of the coating head 201 actually remains unchanged after the interchange. That is, in another embodiment, the upper shim 207 is set to a shape of the lower shim 208 in FIG. 10, and the lower shim 208 is set to a shape of the upper shim 207 in FIG. 10. Correspondingly, the upper die 204 and the middle die 205 define the second flow channel; the upper shim 207 is sandwiched between the upper die 204 and the middle die 205; and the exit slit 210 between the upper die 204 and the middle die 205 is divided by the plurality of separators 209 of the upper shim 207 to form the plurality of second discharge ports 203; and the middle die 205 and the lower die 206 jointly define the first discharge port 202.

In descriptions of the present disclosure, descriptions of the reference term such as "an embodiment," "some embodiments," "exemplary embodiments," "example," "specific example," or "some examples" means that a specific feature, structure, material, or characteristic described with reference to the embodiment or example is included in at least one embodiment or example of the present disclosure. In this specification, example descriptions of the foregoing terms do not necessarily refer to the same embodiment or example. In addition, described specific features, structures, materials, or characteristics can be combined appropriately in any one or more embodiments or examples.

## Claims

1. A method of manufacturing an electrode sheet, **characterized by** comprising:
coating a to-be-coated surface of a current collector with a first active material to form a first wide layer;
coating the to-be-coated surface with a second active material to form a narrow layer; and
coating the to-be-coated surface with a third active material to form a second wide layer; wherein the first wide layer, the narrow layer, the second wide layer, and the to-be-coated surface jointly define a tab welding groove; wherein the materials of the first active material, the second active material, and the third active material are all the same; the first wide layer, the narrow layer, and the second wide layer are sequentially connected along a first direction; a length of the narrow layer in a second direction is less than a length of the first wide layer in the second direction; the length of the narrow layer in the second direction is less than a length of the second wide layer in the second direction; and any two of the first direction, the second direction, and a thickness direction of the current collector are perpendicular to each other.

2. The method of manufacturing an electrode sheet according to claim 1, **characterized in that** the length of the first wide layer in the second direction is equal to the length of the second wide layer in the second direction.

3. The method of manufacturing an electrode sheet according to claim 1, **characterized in that** the first wide layer, the narrow layer, and the second wide layer are formed sequentially;
a step of forming the first wide layer comprises: coating the to-be-coated surface with the first active material along the first direction;
a step of forming the narrow layer comprises: coating the to-be-coated surface with the second active material along the first direction, wherein a coating start point of the narrow layer coincides with a coating end point of the first wide layer; and
a step of forming the second wide layer comprises: coating the to-be-coated surface with the third active material along the first direction, wherein a coating start point of the second wide layer coincides with a coating end point of the narrow layer.

4. A method of manufacturing an electrode sheet, **characterized by** comprising:
coating a to-be-coated surface of a current collector jumbo roll with a first active material to form a first continuous layer;
coating the to-be-coated surface with a second active material to form a discontinuous layer, wherein the discontinuous layer comprises a plurality of narrow layers;
coating the to-be-coated surface with a third active material to form a second continuous layer; wherein the first continuous layer, the discontinuous layer, and the second continuous layer are sequentially connected along a first direction; the plurality of narrow layers are distributed at intervals along a second direction; any two of the first direction, the second direction, and a thickness direction of the current collector are perpendicular to each other; and the materials of the first active material, the second active material, and the third active material are all the same; and
splitting an intermediate product to form a plurality of electrode sheets; wherein the intermediate product is a current collector provided with the first continuous layer, the discontinuous layer, and the second continuous layer; wherein the current collector jumbo roll is split into a plurality of current collectors; the first continuous layer is split into a plurality of first wide layers distributed along the second direction; and the second continuous layer is split into a plurality of second wide layers distributed along the second direction; and the electrode sheet obtained through splitting comprises a current collector, a first wide layer, the narrow layer, and a second wide layer; the first wide layer, the narrow layer, and the second wide layer are sequentially connected along the first direction; a length of the narrow layer in the second direction is less than a length of the first wide layer in the second direction; the length of the narrow layer in the second direction is less than a length of the second wide layer in the second direction; and the first wide layer, the narrow layer, the second wide layer, and the to-be-coated surface jointly define a tab welding groove.

5. The method of manufacturing an electrode sheet according to claim 4, **characterized in that** the first continuous layer, the discontinuous layer, and the second continuous layer are formed sequentially;
a step of forming the first continuous layer comprises: coating the to-be-coated surface with the first active material along the first direction;
a step of forming the discontinuous layer comprises: coating the to-be-coated surface with the second active material along the first direction, wherein a coating start point of the discontinuous layer coincides with a coating end point of the first continuous layer; and
a step of forming the second continuous layer comprises: coating the to-be-coated surface with the third active material along the first direction, wherein a coating start point of the second continuous layer coincides with a coating end point of the discontinuous layer.

6. A coating device used in the method of manufacturing an electrode sheet according to claim 3, **characterized in that** the coating device comprises a discharge mechanism and a feeding mechanism connected to each other; the discharge mechanism has a first discharge port and a second discharge port; and the feeding mechanism and the discharge mechanism are configured as follows:
during a first time period, the feeding mechanism causes the first active material to flow out of the first discharge port;
during a second time period, the feeding mechanism causes the second active material to flow out of the second discharge port; and
during a third time period, the feeding mechanism causes the third active material to flow out of the first discharge port;
wherein the first time period, the second time period, and the third time period are sequentially set chronologically; the current collector continuously passes through the first discharge port and the second discharge port during the first time period to the third time period; the first discharge port and the second discharge port are distributed at intervals along the thickness direction of the current collector; and a length of the second discharge port in the second direction is less than a length of the first discharge port in the second direction.

7. The coating device according to claim 6, **characterized in that** an angle between an orientation of the first discharge port and an orientation of the second discharge port is an acute angle; when the coating device coats the to-be-coated surface, an intersection point between the orientation of the first discharge port and the orientation of the second discharge port is located on the to-be-coated surface, or the intersection point is located between the to-be-coated surface and the first discharge port.

8. The coating device according to claim 6, **characterized in that** the discharge mechanism comprises two coating heads, one of the coating heads is provided with the first discharge port, and the other coating head is provided with the second discharge port;
or
the discharge mechanism comprises one coating head, and the first discharge port and the second discharge port are arranged on the same coating head.

9. A coating device used in the method of manufacturing an electrode sheet according to claim 3, **characterized in that** the coating device comprises a discharge mechanism, a feeding mechanism, and an adjustment mechanism; the discharge mechanism has a discharge port; the adjustment mechanism is configured to adjust a length of the discharge port in the second direction; the feeding mechanism is connected to the discharge mechanism; and the feeding mechanism and the adjustment mechanism are configured as follows:
during a first time period, the feeding mechanism causes the first active material to flow out of the discharge port, wherein the length of the discharge port in the second direction is a first length;
during a second time period, the feeding mechanism causes the second active material to flow out of the discharge port, wherein the length of the discharge port in the second direction is a second length, and the second length is less than the first length; and
during a third time period, the feeding mechanism causes the third active material to flow out of the discharge port, wherein the length of the discharge port in the second direction is the first length;
wherein the first time period, the second time period, and the third time period are sequentially set chronologically; the current collector continuously passes through the discharge port during the first time period, the second time period, and the third time period; and a movement direction of the discharge port relative to the current collector is the first direction.

10. A coating device used in the method of manufacturing an electrode sheet according to claim 5, **characterized in that** the coating device comprises a discharge mechanism and a feeding mechanism connected to each other; the discharge mechanism has a first discharge port and a plurality of second discharge ports; and the feeding mechanism and the discharge mechanism are configured as follows:
during a first time period, the feeding mechanism causes the first active material to flow out of the first discharge port;
during a second time period, the feeding mechanism causes the second active material to flow out of the plurality of second discharge ports; and
during a third time period, the feeding mechanism causes the third active material to flow out of the first discharge port;
wherein the first time period, the second time period, and the third time period are sequentially set chronologically; the current collector continuously passes through the first discharge port and the second discharge ports during the first time period to the third time period; the first discharge port and the second discharge port are distributed at intervals along the thickness direction of the current collector; the plurality of second discharge ports are distributed at intervals along the second direction; and a sum of lengths of the plurality of second discharge ports in the second direction is less than a length of the first discharge port in the second direction.

11. The coating device according to claim 10, **characterized in that** the discharge mechanism comprises one coating head, the first discharge port and the second discharge ports are located on the coating head, and the coating head comprises:
an upper die;
a middle die, wherein the upper die and the middle die are stacked on each other and define a first flow channel for the first active material and the third active material to flow; and the first flow channel comprises the first discharge port;
a lower die, wherein the lower die and the middle die are stacked on each other and define a second flow channel for the second active material to flow; the second flow channel comprises an exit slit; the upper die and the lower die are located on different sides of the middle die; and the first flow channel and the second flow channel are separated from each other; and
a lower shim, wherein the lower shim comprises a plurality of separators distributed at intervals along the second direction; the lower shim is detachably sandwiched between the lower die and the middle die; and a portion of the exit slit is blocked by the separators, such that portions of the exit slit exposed outside the separators form the plurality of second discharge ports.

12. The coating device according to claim 10, **characterized in that** the discharge mechanism comprises one coating head, the first discharge port and the second discharge ports are located on the coating head, and the coating head comprises:
an upper die;
a middle die, wherein the upper die and the middle die are stacked on each other and define a second flow channel for the second active material to flow; and the second flow channel comprises an exit slit;
a lower die, wherein the lower die and the middle die are stacked on each other and define a first flow channel for the first active material and the third active material to flow; and the first flow channel comprises the first discharge port; and
an upper shim, wherein the upper shim comprises a plurality of separators distributed at intervals along the second direction; the upper shim is detachably sandwiched between the upper die and the middle die; and a portion of the exit slit is blocked by the separators, such that portions of the exit slit exposed outside the separators form the second discharge ports.
